# FASCICULE DE BREVET EUROPEEN

(11) **EP 0 553 934 B1**
(45) Date de publication et mention de la délivrance du brevet: **15.07.1998**
(21) Numéro de dépôt: 93200349.4
(22) Date de dépôt: 05.10.1990
(51) Int. Cl.: A43B 5/14, B62M 3/08

(54) **Semelle de chaussure cycliste destinée à être équipée d'une cale**
Schuhsohle für Radfahrer, bestimmt um mit einer Stossplatte ausgerüstet zu werden
Shoe sole for cyclist to be equipped with a cleat

(30) Priorité: 16.10.1989 FR 8913484
(43) Date de publication de la demande: 04.08.1993
(62) Demande divisionnaire de: 90402782.8
(73) Titulaire: Beyl, Suzanne, 58000 Nevers (FR)
(72) Inventeur: Beyl, Jean, (FR)
(74) Mandataire: Michardière, Bernard

(56) Documents cités:
- EP-A- 298 139
- US-A- 4 662 090
- US-A- 4 825 565
- US-A- 4 907 355

## Description

L'invention est relative à une semelle de chaussure cycliste destinée à être équipée d'une cale, pour un dispositif de fixation d'une chaussure sur une pédale de bicyclette.

US-A-4 807 368 (BEYL) montre aux Figures 7 et 8 une telle semelle.

Par ailleurs, GB-20 289 (MATTHEWS), de même que US-A-4 538 480 et US-A-4 640 151 montrent qu'il est connu et avantageux d'encastrer, dans la semelle de chaussure, les moyens de fixation fixés sous la semelle, de façon à ne pas gêner la marche à pied du cycliste.

Le document EP-A-0 298 139 montre une semelle de chaussure cycliste, destinée à être équipée d'une cale, comprenant une semelle externe dans laquelle est prévu un évidement dans la région située au-dessous de l'articulation du gros orteil, la cale étant destinée à être fixée dans cet évidement. Selon ce document, une insertion de renforcement est prévue sur une fraction de la longueur de la semelle. La moitié de longueur arrière de la semelle est dépourvue de tout renforcement. Des évidements sont prévus en avant et en arrière de la plaque de fixation pour que la semelle présente une élasticité de flexion accrue de sorte qu'un déroulement du pied lors de la marche soit possible, sensiblement de la même manière Que pour une chaussure de marche normale. Une telle élasticité, favorable à la marche à pied, n'est par contre pas favorable à la transmission des efforts de pédalage du pied à la pédale. En outre, l'ancrage de l'insertion de renforcement dans la semelle est délicat à résoudre et peut conduire, à terme, à une séparation dans les zones de raccordement. De plus, les possibilités de réglage suivant le sens longitudinal de la place de fixation relativement à la semelle demandent à être améliorées.

L'invention a pour but, surtout, de fournir une semelle de chaussure cycliste, telle que définie précédemment, qui permette de concilier au mieux les exigences de pédalage imposées par les dispositifs de fixation modernes, et les exigences pour la marche à pied.

Selon l'invention, une semelle de chaussure cycliste destinée à être équipée d'une cale, pour un dispositif de fixation sur une pédale, comprenant une semelle externe dans laquelle est prévu un évidement dans la région située au-dessous de l'articulation du gros orteil, la cale étant destinée à être fixée dans l'évidement, est caractérisée par le fait qu'elle comprend une semelle interne en matière rigide pour la fixation de la cale, que la semelle externe est en matière relativement souple et que la fixation de la cale est réalisée avec une possibilité de réglage suivant la direction longitudinale par coulissement des vis de fixation de la cale dans des fenêtres oblongues prévues dans la semelle de chaussure.

D'autres caractéristiques de l'invention sont définies dans les revendications suivantes.

L'invention consiste, mises à part les dispositions exposées ci-dessus, en un certain nombre d'autres dispositions dont il sera plus explicitement Question ci-après à propos d'un exemple de réalisation particulier décrit avec référence aux dessins ci-annexés, mais qui n'est nullement limitatif.

La figure 1, de ces dessins, est une vue en plan d'une pédale de bicyclette et d'une chaussure, schématiquement représentée, équipées d'un dispositif de fixation.

La figure 2 est une coupe suivant la ligne II-II figure 1.

La figure 3 est une vue partielle, semblable à la figure 1, alors que la cale a tourné vers l'extérieur (talon vers l'extérieur) relativement à la bicyclette.

La figure 4 est une vue de dessous d'une semelle de chaussure destinée à recevoir la cale du dispositif de fixation.

La figure 5, enfin, est une coupe suivant la ligne V-V de la figure 4.

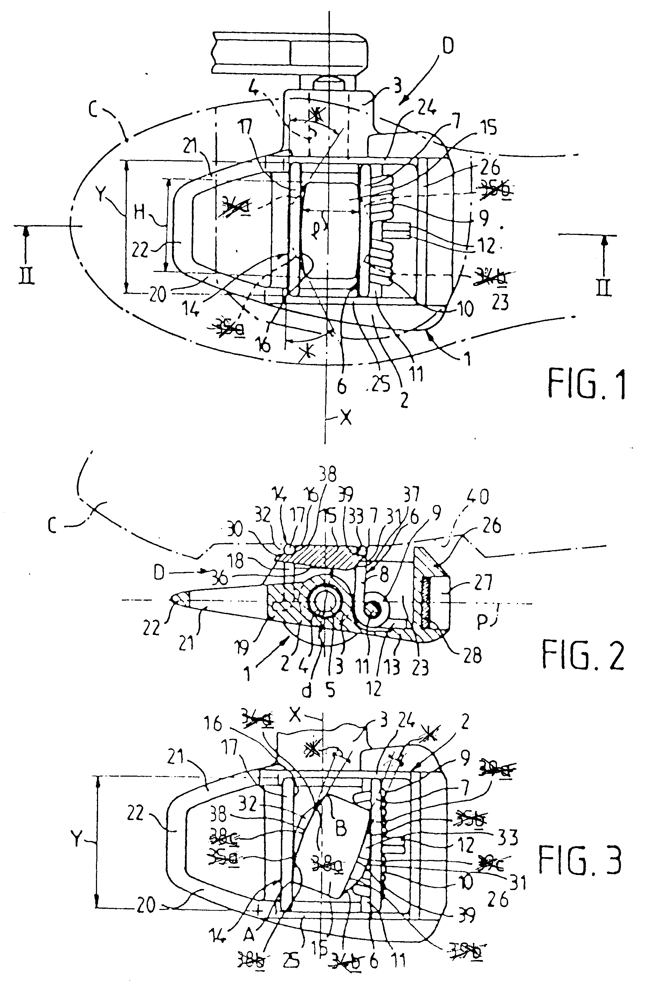

En se reportant aux dessins, notamment aux figures 1 à 3, on peut voir un dispositif D de fixation d'une chaussure C sur une pédale de bicyclette 1 ayant un corps de pédale 2 qui comporte un fût 3 de forme sensiblement cylindrique, muni d'un logement 4 destiné à recevoir un axe transversal 5 pour le montage rotatif du corps de pédale sur cet axe, avec interposition de paliers à billes ou à aiguilles non représentés.

Le corps de pédale 2 comporte un organe d'accrochage 6 situé en arrière du fût. Cet organe d'accrochage est avantageusement réalisé en forme d'arceau, à l'aide d'un fil d'acier à ressort à section circulaire. Il comprend une barre transversale 7 constituant un bord d'accrochage rectiligne, sensiblement parallèle à l'axe géométrique transversal X du fût autour duquel peut tourner la pédale. A chaque extrémité la barre 7 est prolongée par des parties recourbées sensiblement à angle droit formant des bras orientés radialement tels que 8 (figure 2), sensiblement orthogonaux au plan moyen P du corps de pédale 2. Les extrémités des bras 8, éloignées de la barre 7, sont enroulées en sens inverse de manière à constituer deux ressorts de torsion 9, 10 enfilés sur une tige transversale 11 solidaire du corps de pédale. La tige 11 est située au-dessous du plan moyen du corps 2. Les extrémités voisines 12 des ressorts de torsion 9, 10 sont dirigées vers l'arrière et prennent appui contre une paroi inférieure 13 du corps de pédale.

La barre 7 peut être déplacée vers l'arrière, suivant une direction sensiblement orthogonale à l'axe X du fût 3, à l'encontre de l'effort de rappel élastique exercé par les ressorts 9 et 10. En fait, la barre 7 décrit un arc de cercle sensiblement centré sur l'axe de la tige 11.

Il convient de noter que les expressions "arrière" et "avant" utilisées dans le texte sont données en référence avec le sens de progression de la bicyclette équipée de la pédale 1. L'avant de la pédale est la partie située devant l'axe X ; sur les figures 2 et 3, c'est la partie gauche, tandis que la partie droite constitue la partie arrière.

L'organe d'accrochage arrière 6 et son bord d'accrochage 7 sont situés le plus près possible du fût 3. Pratiquement, les bras radiaux 8 sont tangents à la surface arrière du fût 3. A l'état repos, lorsque la barre 7 n'est pas sollicitée vers l'arrière par des forces extérieures, les bras 8 sont sensiblement orthogonaux au plan moyen P du corps de pédale 2.

Dans l'exemple de réalisation considéré, le corps de pédale 2 est muni, en avant du fût 3, d'un organe d'accrochage avant 14 constituant à la fois un moyen de butée frontale et un moyen de retenue vers le haut, coopérant avec une cale 15 fixée sous la semelle de la chaussure.

L'organe d'accrochage avant 14 est fixe relativement à la pédale 1 et comporte un bord d'accrochage rectiligne 16 sensiblement parallèle à l'axe X. L'organe 14 est avantageusement constitué par un fil d'acier à grande résistance ayant un diamètre réduit, notamment d'environ 3 mm.

L'organe 14 forme sensiblement un arceau dont la partie principale est une barre transversale rectiligne 17 parallèle à la barre 7. Les extrémités de la barre 17 sont recourbées sensiblement à angle droit de manière à former des bras 18 sensiblement orthogonaux au plan moyen P. Les extrémités des bras 18 éloignées de la barre 17 sont ancrées dans le corps 2. Le bord 16 est formé par la zone inférieure et la zone arrière de la barre 17.

Les deux barres 7 et 17 sont situées sensiblement à la même distance du plan moyen P et au-dessus du plan tangent supérieur au fût 3.

L'écartement entre la barre avant 17 et la barre arrière 7, alors que la cale 15 n'est pas insérée, est le plus faible possible. Cet écartement est au plus égal à la moitié de l'étendue transversale Y des barres 7 et 17 et, en pratique, est sensiblement égal au diamètre extérieur d du fût 3.

Il est à noter que la forme extérieure de ce fût 3, en section transversale comme visible sur la figure 2, est sensiblement celle d'un demi-cylindre de diamètre d délimité par le plan bissecteur du quadrant gauche supérieur et du quadrant opposé. Le corps de pédale 2 comprend une partie massive 19 qui prolonge vers l'avant le fût 3. L'ancrage des bras 18 est réalisé dans cette partie 19, les bras 18 étant sensiblement tangents à la partie du cercle prolongeant le contour demi-cylindrique du fût 3.

La partie massive 19 du corps de pédale est munie, de chaque côté, d'une branche de prolongement 20, 21. Ces branches convergent vers l'avant et sont reliées entre elles par une traverse 22, à leur extrémité éloignée du fût 3. L'épaisseur de la partie 19, suivant une direction perpendiculaire au plan moyen P, de même que l'épaisseur des branches 20, 21 diminuent progressivement quand on s'éloigne du fût 3.

Le corps de pédale 2 présente, à l'arrière, un évidement 23 dans lequel sont logés les ressorts 9 et 10, cet évidement étant ouvert vers le haut et fermé vers le bas par la plaque 13. L'évidement 23 est délimité sur les côtés par les prolongements de deux parois longitudinales 24, 25, sensiblement orthogonales au plan P, encadrant les organes 6 et 14. Une paroi transversale arrière 26 relie les parois 24 et 25 et ferme l'évidement 23. Cette paroi 26 comporte un logement 27 s'ouvrant vers l'arrière, dans lequel peut être montée une plaque catadioptre 28.

La cale 15 fixée sous la semelle à l'aide de vis (non montrées) est avantageusement métallique, notamment réalisée en alliage cupro-aluminium. La fixation de la cale est réalisée avec une possibilité de réglage suivant la direction longitudinale par coulissement des vis de fixation de la cale 15 dans des fenêtres oblongues telles que 29 prévues dans la semelle de chaussure.

La cale 15, vue en plan (figure 1), a une forme générale sensiblement rectangulaire dont la grande dimension H (direction transversale de la cale) est orientée parallèlement à l'axe X lorsque la chaussure est dans sa position moyenne normale sur la pédale. La petite dimension 1 de la cale est orientée suivant la direction longitudinale et est, de préférence, inférieure à la moitié de la dimension H (H/l > 2).

La cale 15 comporte deux rebords inférieurs transversaux d'accrochage 30, 31 en saillie respectivement vers l'avant et vers l'arrière.

Les rebords 30, 31 délimitent, avec la surface inférieure de la semelle, deux rainures transversales 32, 33 propres à recevoir respectivement les barres 17 et 7. Les rainures 32, 33 débouchent à leurs extrémités transversales de sorte que les barres 17, 7 peuvent s'étendre au-delà desdites extrémités transversales des rainures. Les rebords 30, 31, en position normale de fixation, sont engagés respectivement sous les barres 17, 7 des arceaux avant et arrière de la pédale, et sont encadrés, transversalement, respectivement par les bras 18 et 8.

La surface inférieure de la cale 15 est sensiblement constituée par deux faces planes 36, 37 présentant des inclinaisons différentes relativement au plan moyen P, lorsque la cale 15, fixée à la chaussure, est en place sur la pédale. La face 36 a une inclinaison relativement faible à partir du bord avant de la cale 15 vers l'arrière ; la face 37, inclinée plus fortement en sens inverse de manière à remonter vers l'arrière, constitue une rampe provoquant le recul de la barre 7 lorsque la chaussure exerce une pression sensiblement verticale sur cette barre. Les deux surfaces 36 et 37 forment sensiblement un dièdre dont la convexité est tournée vers le bas, l'arête du dièdre étant située vers l'arrière de la cale 15.

Les surfaces de fond 38, 39, des rainures 32, 33, sensiblement orthogonales au plan P lorsque la cale 15 est fixée, avec la chaussure, sur la pédale, forment des surfaces de butée frontale coopérant avec les barres 17 et 7.

Les barres 7 et 17, et la cale 15 sont agencées de manière que la chaussure, fixée sur la pédale, puisse se déplacer transversalement, c'est-à-dire parallèlement à l'axe X, d'une certaine amplitude. Pour cela, les barres 7 et 17 s'étendent sensiblement suivant toute la largeur de la pédale 1 tandis que la dimension transversale H de la cale 15 est inférieure à la distance entre les faces intérieures en regard des bras 8 ou 18. De préférence, un jeu transversal de 7 mm environ est prévu entre la cale et les bras 8, 18 de sorte que la cale 15 et la chaussure peuvent se déplacer latéralement de 7 mm. Ceci permet au cycliste d'ajuster de lui-même la position latérale de son pied sur la chaussure en fonction de sa morphologie.

La longueur du rebord avant 30 peut être réduite pour faciliter le décrochage de la chaussure relativement à la pédale en cas de chute avant.

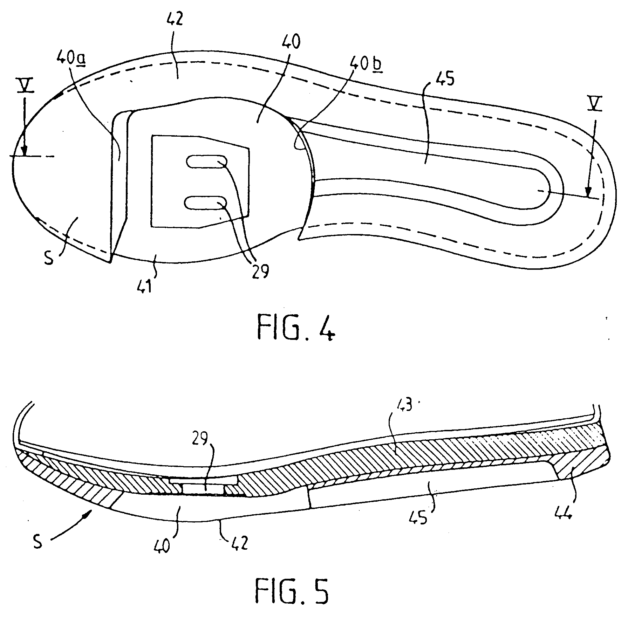

La semelle S de la chaussure C comporte un évidement 40 (figures 4 et 5), dans la région située au-dessous de l'articulation du gros orteil. Cet évidement 40, comme visible sur la figure 2, est propre à recevoir la partie supérieure, en particulier la partie supérieure arrière, de la pédale. La cale 15 est destinée à être fixée dans l'évidement 40 qui s'ouvre en 41 sur le bord intérieur de la chaussure et qui est fermé par une bordure 42 du côté extérieur. L'évidement 40 est suffisamment profond pour que la cale 15 ne soit pas en contact avec le sol lorsque le cycliste marche sur le sol avec une telle chaussure. Autrement dit, la cale 15 est située à l'intérieur de la surface enveloppe prolongeant fictivement la semelle S dans l'évidement 40. Les dimensions de cet évidement sont suffisantes pour permettre les débattements des différentes pièces du dispositif de fixation lors de la mise en place de la chaussure sur la pédale et de sa séparation. Le bord avant 40a de l'évidement 40 s'étend transversalement selon un plan incliné vers l'avant, tandis que le bord arrière 40b forme un arc de courbe, sensiblement circulaire, tournant sa concavité vers l'avant.

La semelle S comprend une semelle interne 43 en matière rigide, comportant notamment une plaque métallique (non représentée) de fixation pour la cale 15, et une semelle externe 44 en matière relativement souple dans laquelle est prévu le susdit évidement 40. Cette semelle 44 peut comporter , dans la partie longitudinale moyenne, une rainure 45 qui débouche dans l'évidement 40 et qui est fermée vers l'arrière.

Il est à noter que la semelle de chaussure appuie uniquement sur les barres 7 et 17, la cale 15 n'appuyant pas sur le fût 3 comme visible sur la figure 2. La présence de la semelle rigide 43 permet au cycliste de pédaler sans ressentir la pression des barres 7 et 17. La semelle souple 44, courbée (convexe vers l'extérieur) à l'endroit du métatarse, facilite la marche à pied.

Le fonctionnement du dispositif de fixation selon l'invention est le suivant.

Lorsque le cycliste veut réaliser la liaison entre sa chaussure équipée de la cale 15 et la pédale correspondante, il opère de la manière suivante.

La pédale 1 est conçue de manière qu'au repos son bord avant 22 soit relevé alors que sa partie arrière 26 est plus basse.

Le cycliste engage la barre 17 dans la rainure 32 et exerce une poussée sur son pied vers le bas et vers l'avant de sorte que la surface inclinée 37 va repousser la barre 7 vers l'arrière à l'encontre du couple exercé par les ressorts 9 et 10. La barre 7 va s'effacer permettant le passage du rebord arrière 31. Dès que la barre 7 se trouve en face de la rainure 33, l'action des ressorts 9 et 10 provoque un léger mouvement vers l'avant de la barre 7 qui s'engage dans la rainure 33. La chaussure est alors fixée sur la pédale 1.

Il est à noter que l'appui de la chaussure sur la pédale s'effectue uniquement au niveau des barres 7 et 17, la cale 15 n'étant pas en appui, par sa surface inférieure, contre le fût 3.

La longueur de la cale 15 (c'est-à-dire sa dimension l suivant la direction longitudinale) étant la plus réduite possible ; la longueur de la pédale peut être réduite. L'encastrement, et donc l'évidement 40, dans la semelle S est faible ce qui permet de conserver une grande surface de semelle S réservée à la marche.

Comme déjà expliqué, lors d'une rotation vers l'extérieur, la cale 15, pratiquement rectangulaire, pivote autour de son angle avant gauche A en s'appuyant sur la butée frontale ou barre 17 et en repoussant la barre 7 sollicitée élastiquement pour le maintien. Avec un tel système, la semelle S de la chaussure peut effectuer en torsion une grande course d'environ 60° tout en étant soumise à un rappel élastique tendant à la ramener dans l'axe longitudinal de la pédale. Naturellement, un cycliste ne pourrait pas effectuer volontairement une torsion, aussi importante angulairement, de 60°. Ceci constitue une garantie contre des déchaussages intempestifs.

Le déchaussage est obtenu par une libération vers le haut de la chaussure, relativement à la pédale, lorsqu'un angle d'ouverture en torsio n, supérieur à ce qui peut être rencontré dans le pédalage le plus brutal, a été atteint, cet angle restant cependant relativement facile à provoquer p ar le cycliste dans un mouvement volontaire.

L'expérience a montré qu'un angle de 20°, talon du pied vers l'extérieur, est convenable.

## Revendications

1. Semelle de chaussure cycliste destinée à être équipée d'une cale, pour un dispositif de fixation sur une pédale, comprenant une semelle externe (44) dans laquelle est prévu un évidement (40) dans la région située au-dessous de l'articulation du gros orteil, la cale étant destinée à être fixée dans l'évidement (40), caractérisée par le fait qu'elle comprend une semelle interne (43) en matière rigide pour la fixation de la cale, que la semelle externe (44) est en matière relativement souple et que la fixation de la cale (15) est réalisée avec une possibilité de réglage suivant la direction longitudinale par coulissement des vis de fixation de la cale (15) dans des fenêtres oblongues (29) prévues dans la semelle (43) de chaussure.

2. Semelle de chaussure cycliste selon la revendication 1 fixée sur une pédale , caractérisée par le fait que l'évidement (40) reçoit la partie supérieure de la pédale.

3. Semelle selon la revendication 1 ou 2 , caractérisée par le fait que la semelle interne (43) en matière rigide comporte une plaque métallique de fixation pour la cale (15) .

4. Semelle selon l'une des revendications 1 à 3, caractérisée par le fait que l'évidement (40) est suffisamment profond pour que la cale (15) fixée dans l'évidement (40) ne soit pas en contact avec le sol lorsque le cycliste marche sur le sol.

5. Semelle selon l'une des revendications précédentes, caractérisée par le fait que l'évidement (40) est fermé par une bordure (42) du côté extérieur.

6. Semelle selon l'une des revendications précédentes, caractérisée par le fait que la semelle rigide (43) permet au cycliste de pédaler sans ressentir la pression des barres de la pédale.

7. Semelle selon l'une des revendications précédentes caractérisée par le fait que le bord avant (40a) de l'évidement (40) s'étend transversalement selon un plan incliné vers l'avant.

8. Semelle selon l'une des revendications précédentes caractérisée par le fait que la semelle souple (44) est courbée (convexe vers l'extérieur) à l'endroit du métatarse.

## Claims

1. Shoe sole, for cyclist, to be equipped with a cleat, for a device for fastening onto a pedal, comprising an outsole (44) in which a recess (40) is provided in the region located below the big-toe joint, the cleat being for fixing in the recess (40), characterized in that it comprises an insole (43) made from rigid material for fastening the cleat, in that the outsole (44) is made from relatively flexible material, and in that the cleat (15) is fastened with a possibility of adjustment in the longitudinal direction by sliding the fastening screws of the cleat (15) in oblong apertures (29) provided in the shoe sole (43).

2. Shoe sole, for cyclist, according to Claim 1, fastened onto a pedal, characterized in that the recess (40) receives the upper part of the pedal.

3. Sole according to Claim 1 or 2, characterized in that the insole (43) made from rigid material includes a metal fastening plate for the cleat (15).

4. Sole according to one of Claims 1 to 3, characterized in that the recess (40) is sufficiently deep for the cleat (15) fastened in the recess (40) not to be in contact with the ground when the cyclist is walking along the ground.

5. Sole according to one of the preceding claims, characterized in that the recess (40) is closed by a border (42) of the outer side.

6. Sole according to one of the preceding claims, characterized in that the rigid sole (43) enables the cyclist to pedal without feeling the pressure of the pedal bars.

7. Sole according to one of the preceding claims, characterized in that the front edge (40a) of the recess (40) extends transversely in a plane which is inclined forwards.

8. Sole according to one of the preceding claims, characterized in that the flexible sole (44) is curved (outwardly convex) at the location of the metatarsus.

## Patentansprüche

1. Radfahrschuhsohle zum Versehen mit einem Keil für eine Vorrichtung zur Befestigung an einem Pedal, mit einer äußeren Sohle (44), in der eine Ausnehmung (40) in dem unter dem Gelenk des großen Zehs befindlichen Bereich ausgebildet ist, wobei der Keil zur Befestigung in der Ausnehmung (40) bestimmt ist, dadurch gekennzeichnet, daß sie eine innere Sohle (43) aus steifem Material zur Befestigung des Keils aufweist, daß die äußere Sohle (44) aus einem relativ biegsamen Material besteht, und daß die Befestigung des Keils (15) mit der Möglichkeit der Verstellung in Längsrichtung durch gleitendes Verschieben der Befestigungsschrauben des Keils (15) in länglichen Fenstern (29) ausgebildet ist, die in der Sohle (43) vorgesehen sind.

2. Radfahrschuhsohle nach Anspruch 1, auf einem Pedal befestigt, dadurch gekennzeichnet, daß die Ausnehmung (40) den oberen Bereich des Pedals aufnimmt.

3. Sohle nach Anspruch 1 oder 2, dadurch gekennzeichnet, daß die aus einem steifen Material bestehende innere Sohle (43) eine Metallplatte zur Befestigung des Keils (15) aufweist.

4. Sohle nach einem der Ansprüche 1 bis 3, dadurch gekennzeichnet, daß die Ausnehmung (40) ausreichend tief ist, daß der in der Ausnehmung (40) befestigte Keil (15) nicht in Kontakt mit dem Boden ist, wenn der Radfahrer auf dem Boden läuft.

5. Sohle nach einem der vorhergehenden Ansprüche, dadurch gekennzeichnet, daß die Ausnehmung (40) durch einen Rand (42) der Außenseite geschlossen ist.

6. Sohle nach einem der vorhergehenden Ansprüche, dadurch gekennzeichnet, daß die steife Sohle (43) dem Radfahrer die Pedalbetätigung ohne das Spüren der Pedalstäbe ermöglicht.

7. Sohle nach einem der vorhergehenden Ansprüche, dadurch gekennzeichnet, daß sich die Vorderkante (40a) der Ausnehmung (40) transversal entlang einer nach vorn geneigten Ebene erstreckt.

8. Sohle nach einem der vorhergehenden Ansprüche, dadurch gekennzeichnet, daß die biegsame Sohle (44) im Mittelfußbereich gekrümmt (nach außen konvex) ist.
